# EUROPEAN PATENT APPLICATION

(11) **EP 4 819 320 A1**
(43) Date of publication of application: **07.10.2026**
(21) Application number: 24897578.1
(22) Date of filing: 27.11.2024
(51) Int. Cl.: H01M 50/204, H01G 9/00, H01G 11/14, H01G 11/18, H01M 10/613, H01M 10/625, H01M 10/643, H01M 10/658, H01M 10/6567, H01M 50/213, H01M 50/293

(54) **ELECTRIC POWER STORAGE MODULE**

(30) Priority: 30.11.2023 JP 2023203391
(71) Applicant: Panasonic Energy Co., Ltd., Moriguchi-shi, Osaka 570-8511 (JP)
(72) Inventor: SHIMIZU, Keisuke, Kadoma-shi, Osaka 571-0057 (JP)
(74) Representative: Eisenführ Speiser
(86) International application number: PCT/JP2024/041946
(87) International publication number: WO 2025/115894

(57) **Abstract**

A battery pack (1) is provided with: a case (10); a plurality of batteries (30) accommodated within the case (10); a cooling liquid (50) filled into the case (10); a first holder (61) disposed within the case (10), the first holder accommodating the upper parts of the batteries (30); and a heat-insulating material (90) that is disposed on the lower surface of the first holder (61) and is positioned around the plurality of batteries (30). The plurality of batteries (30) are immersed in the cooling liquid (50) within the case (10).

## Description

### TECHNICAL FIELD

The present disclosure relates to an electric power storage module that accommodates a plurality of electric power storage devices.

### BACKGROUND ART

Conventionally, an electric power storage module accommodates a plurality of electric power storage devices, and connects them in parallel or series, thereby achieving predetermined capacity and voltage. Note that the electric power storage device may be a secondary battery such as a lithium-ion battery, or a capacitor.

In the conventional electric power storage module, the electric power storage devices generate heat due to charging and discharging. Accordingly, it is required to cool the electric power storage devices. For example, for a battery pack as an electric power storage module that employs batteries as electric power storage devices and accommodates these batteries, a liquid immersion cooling scheme that uses insulative liquid coolant is known as the cooling scheme.

Patent Literature 1 discloses that a cooling scheme that uses liquid coolant is employed, gas is not exhausted directly to the outside in case the gas is generated by an abnormality of a battery, but is exhausted to the outside via another space in the battery pack, thereby preventing the liquid coolant from flowing to the outside.

### CITATION LIST

### PATENT LITERATURE

PATENT LITERATURE 1: Japanese Unexamined Patent Application Publication No. 2008-276997

### SUMMARY

An electric power storage module as an aspect of the present disclosure comprises: a case; a plurality of electric power storage devices accommodated in the case; liquid coolant that fills the case; a holder that is disposed in the case, and accommodates upper portions of the electric power storage devices; and a heat insulator that is positioned around the plurality of electric power storage devices, and is disposed on a lower surface of the holder, wherein the plurality of electric power storage devices are immersed in the liquid coolant inside the case.

According to the present disclosure, the liquid coolant at a high temperature in case of abnormal heat generation in one electric power storage device can be prevented from reaching the upper portions of the other batteries, thereby allowing the other batteries to be prevented from causing an abnormality.

### BRIEF DESCRIPTION OF DRAWING

FIG. 1 is a perspective view of a battery pack as an example of an electric power storage module according to an embodiment.
FIG. 2 is a planar sectional view taken along an A-A direction in FIG. 1.
FIG. 3 is a plan view showing the configuration of a first holder.
FIG. 4 is a plan view showing the configuration of a heat insulator.
FIG. 5 is a sectional view showing the configuration of an example of a battery.
FIG. 6 is a diagram showing another example of a planar section taken along the A-A direction in FIG. 1.

### DESCRIPTION OF EMBODIMENTS

Referring to the drawings, embodiments in the present disclosure are described below. Note that the following embodiments do not limit the present disclosure, and configurations made by selectively combining a plurality of examples are also encompassed by the present disclosure.

Electric power storage devices in the present disclosure may be secondary batteries that use aqueous electrolyte, or secondary batteries that use non-aqueous electrolyte. Each electric power storage device in the present disclosure may be a cylindrical battery that comprises a cylindrical (e.g., closed-bottom cylindrical) housing can, a rectangular battery that comprises a rectangular housing can, or a pouch-type battery that comprises a housing body made of a laminated sheet. The cylindrical housing can, the rectangular housing can, and the laminated sheet in these batteries constitute housing bodies. Alternatively, the electric power storage devices in the present disclosure may be capacitors that are repeatedly charged and discharged.

In the present disclosure, a battery pack that accommodates a plurality of batteries in a case is employed as an electric power storage module.

### "Configuration of Battery Pack"

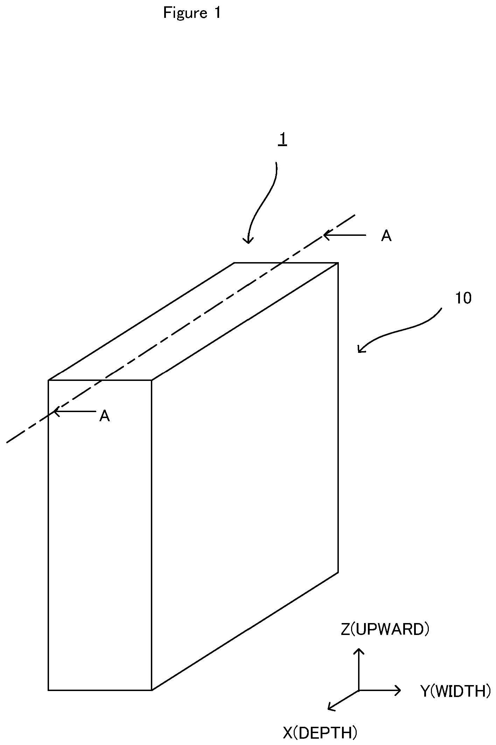

FIG. 1 is a perspective view of a battery pack 1 as an example of an electric power storage module according to an embodiment. The battery pack 1 accommodates a plurality of batteries in a case 10. Insulative liquid coolant is retained in the case 10. At least part of each battery is immersed in the liquid coolant. Note that the battery 30 is sometimes referred to as "electric power storage device". The battery pack 1 is sometimes referred to as "electric power storage module".

The case 10 is made of metal, such as aluminum, and has a substantially rectangular parallelepiped shape. Note that the case 10 is not limited to what is made of metal, and may be made of resin. The shape of the case 10 is not limited to a substantially rectangular parallelepiped. The case 10 has a function of protecting the battery 30 accommodated therein from dust and water.

The battery pack 1 is used as, for example, a power source for motor-driven electric powered equipment, such as an electric vehicle, an electric tool, an electric-assisted bicycle, an electric motorcycle, an electric wheelchair, an electric tricycle, or an electric cart. Note that there is no limitation on the use of the battery pack 1, which may be used as a power source for electric equipment other than electric powered equipment, for example, various types of electric equipment for indoor and outdoor use, such as a cleaner, a wireless device, a lighting device, a digital camera, and a video camera.

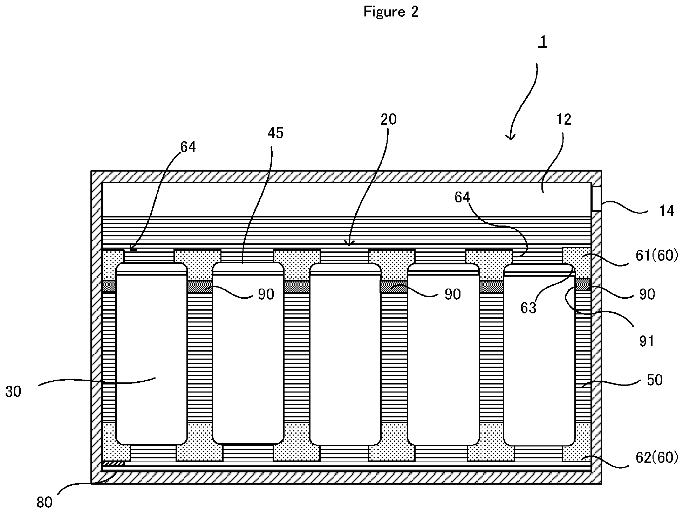

FIG. 2 is a sectional view taken along line A-A in FIG. 1 (a diagram schematically showing a section taken along XZ plane passing through the center in the width direction of the battery pack 1).

The battery pack 1 comprises a battery block 20 that accommodates a plurality of batteries 30 in the case 10. In this example, a cylindrical lithium-ion battery is employed as each battery 30. A cap 45 is disposed at the upper portion of each battery 30.

Liquid coolant 50 is retained in the case 10. At least part of each battery 30 is immersed in the liquid coolant 50. In this example, each battery 30 is entirely immersed in the liquid coolant 50.

The liquid coolant 50 has insulating properties. This can prevent electric leakage from the batteries 30 through the liquid coolant 50. The liquid coolant 50 may be, for example, fluorine inert fluid, such as insulating oil, transformer oil, silicone oil, or hydrofluoroether.

The battery block 20 includes the batteries 30, and a holder 60 that holds these batteries 30. The holder 60 includes a first holder 61 that holds the upper ends of the batteries 30, and a second holder 62 that holds their lower ends. The opposite ends of each of the batteries 30 in the Z direction are inserted into the first holder 61 and the second holder 62, and held thereat.

An exhaust chamber 12 into which gas exhausted through a safety valve of each battery 30 flows is formed in an upper portion of the inside of the case 10. The exhaust chamber 12 is formed between a top plate of the case 10 and the first holder 61. The exhaust chamber 12 is formed above the surface of the liquid coolant in the case 10. An exhaust hole 14 for exhausting gas in the exhaust chamber 12 outside the case 10 is provided at part of the side wall of the case 10. Consequently, when the pressure in a battery 30 increases in case of abnormal heat generation of the battery 30, gas generated in the battery 30 passes through the safety valve, the exhaust chamber 12, and the exhaust hole 14, and then is exhausted outside the case 10.

### "Configuration of Holder"

As described above, the holder 60 of the battery block 20 includes the batteries 30, the first holder 61 that holds the upper end portions of the batteries 30, and the second holder 62 that holds the lower end portions of the batteries 30.

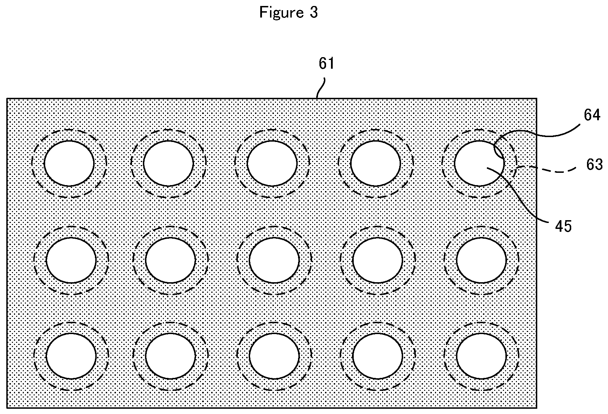

FIG. 3 shows the first holder 61 as viewed from above. As shown in such illustration, the first holder 61 includes: cylindrical concaves 63 that accommodate the shoulder portions on the upper side of the batteries 30; and opening portions 64 that expose the upper surfaces of the caps 45 of the batteries 30. Each concave 63 is formed in the lower surface of the first holder 61, has a circular shape as viewed from below in the Z direction, and has concave cross-sections taken in the X direction and the Y direction.

Each opening portion 64 is formed as a circular hole having a smaller diameter than the diameter of the circular shape of the concave 63 as viewed from below in the Z direction. As viewed from below in the Z direction, the concaves 63 and the respective opening portions 64 are formed such that their corresponding centers can match each other.

Preferably, positive electrode wiring is provided on the surface of the first holder 61, and a positive electrode lead extends to the inside of each opening portion 64 therefrom, and is connected to the positive electrode external terminal of each battery 30. Note that the cap 45 may be used as the positive electrode external terminal. For some types of batteries 30, the negative electrode external terminal may also be configured to be drawn from the upper end. In such cases, negative electrode wiring may also be provided above the first holder 61, and be connected to the negative electrode external terminal of each battery 30 through the negative electrode lead.

The second holder 62 is for holding the lower shoulder portion of each battery 30, and may have the same configuration as the first holder 61, except that it is inverted top to bottom.

The holder 60 (61 and 62) may be made of, for example, high thermal conductive PPS (polyphenylene sulfide) resin, resin containing heat-dissipating filler, injection-moldable thermosetting resin or the like. More specifically, the holder 60 may be made of phenol resin, unsaturated polyester, unsaturated polyester containing heat-absorbing agent in a mixed manner or the like. The holder 60 may be made of inorganic mineral such as mica, or a material made by mixing inorganic mineral such as mica in resin material.

Furthermore, gas exhausted through the safety valve of the battery 30 in case of abnormal heat generation of the battery 30 is allowed to flow into the exhaust chamber 12 through the opening portion 64.

### "Configuration of Heat Insulator"

In the present embodiment, a heat insulator 90 is disposed so as to cover the lower side of the first holder 61.

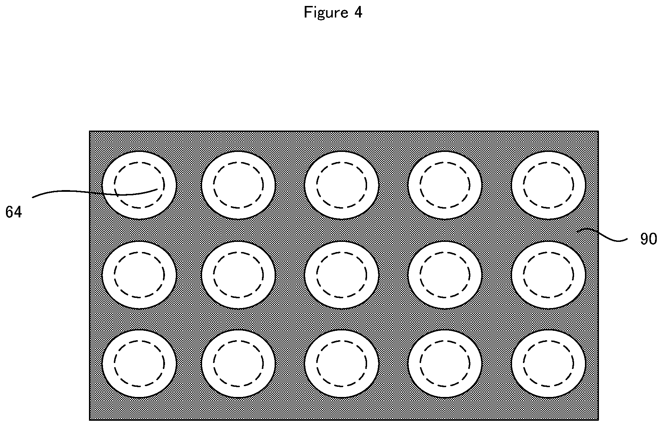

FIG. 4 shows the heat insulator 90 from below in a state where the batteries 30 are removed. As shown in such illustration, opening portions 91 that match the size of each battery 30 are formed in the heat insulator 90. When the heat insulator 90 is viewed from below in the state where the batteries 30 are removed, the concaves 63 of the first holder 61 appear in the respective opening portions 91.

The heat insulator 90 may be preliminarily formed on the lower surface of the first holder 61, and subsequently, the batteries 30 may be inserted into the respective opening portions 91. Alternatively, the batteries 30 may be stored in the respective concaves 63 of the first holder 61, and subsequently, the heat insulator 90 may be inserted. The lower surface of the first holder 61 and the upper surface of the heat insulator 90 may be bonded together with an adhesive or the like.

The heat insulator 90 has a lower thermal conductivity than the first holder 61, and may be formed of closed-cell foam resin, ceramic, a mica plate, glass epoxy or the like.

As described above, in the present embodiment, the heat insulator 90 is disposed beneath the first holder 61 that holds the upper ends of the batteries 30. That is, the heat insulator 90 is positioned between the first holder 61 and the liquid coolant.

If one battery 30 cause a thermal runaway due to an abnormality, and the temperature of part of the liquid coolant positioned below the heat insulator 90 therearound increases, the liquid coolant at a high temperature rises, i.e., is accumulated beneath the heat insulator 90. Accordingly, the heat of the liquid coolant at a high temperature is prevented from propagating by the heat insulator 90, thereby preventing the heat transfer through the first holder 61, and fusing and softening of the resin components of the batteries 30.

Accordingly, in the event of thermal runaway of one battery 30, the normal batteries 30 therearound can be prevented from being short-circuited and bringing the battery pack 1 into a danger state.

### "Configuration of Battery"

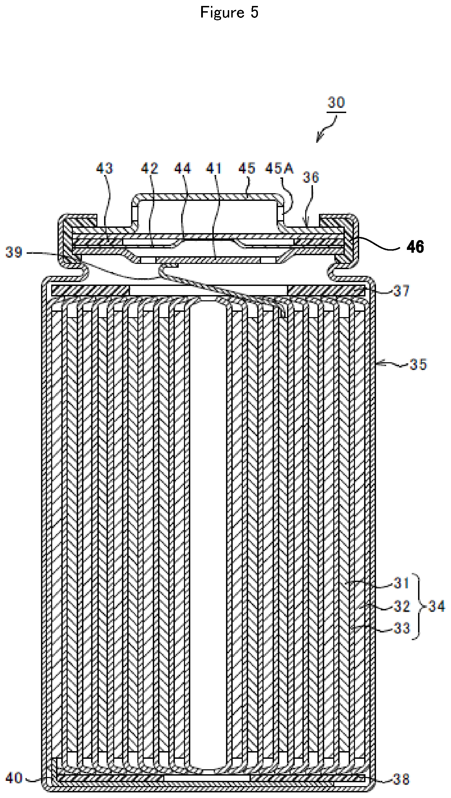

FIG. 5 is a sectional view showing a configuration example of the battery 30 as an example of the electric power storage device. The battery 30 is a cylindrical battery, and is a lithium-ion battery. Note that the battery 30 is not limited to such a cylindrical battery, and may be a rectangular battery, a laminated battery or the like. The battery 30 may be an aqueous battery or a non-aqueous battery. Preferably, a lithium-ion battery is used as an example of a non-aqueous battery.

The battery 30 includes an electrode assembly 34, electrolyte (not shown), and a housing body 35 that stores the electrode assembly 34 and the electrolyte. The electrode assembly 34 includes a positive electrode 31, a negative electrode 32, and a separator 33, and has a wound structure where the positive electrode 31 and the negative electrode 32 are spirally wound with the separator 33 being interposed therebetween.

The housing body 35 has a closed-bottom cylindrical shape opening upward. The opening of the housing body 35 is closed with the sealing assembly 36.

The battery 30 comprises insulating plates 37 and 38 that are disposed above and below the electrode assembly 34, respectively. In the example shown in FIG. 3, a positive electrode lead 39 attached to the positive electrode 31 extends toward the sealing assembly 36 through a through-hole in the insulating plate 37, and a negative electrode lead 40 attached to the negative electrode 32 extends toward the bottom of the housing body 35 through the outside of the insulating plate 38. The positive electrode lead 39 is connected by welding or the like to the lower surface of an internal terminal plate 41 that is a bottom plate of the sealing assembly 36. The cap 45 that is the top plate of the sealing assembly 36 electrically connected to the internal terminal plate 41 serves as a positive electrode external terminal. The negative electrode lead 40 is connected by welding or the like to the bottom inner surface of the housing body 35. The bottom of the housing body 35 serves as a negative electrode external terminal.

The sealing assembly 36 has a structure where the internal terminal plate 41, the lower vent member 42, the insulating member 43, the upper vent member 44, and the cap 45 are stacked from the electrode assembly 34 side. Each of the components that constitute the sealing assembly 36 has, for example, a disk shape or a ring shape. The components except the insulating member 43 are electrically connected to each other. The lower vent member 42 and the upper vent member 44 are connected to each other at their center portions, and the insulating member 43 is interposed between their peripheral edge portions.

The peripheral edge portion of the sealing assembly 36, which has the configuration where the internal terminal plate 41, the lower vent member 42, the insulating member 43, the upper vent member 44, and the cap 45 are stacked, is covered with a gasket 46 made of resin and the housing body 35 disposed outside. That is, by crimping the housing body 35 in a form of enfolding the peripheral edge portion of the sealing assembly 36, the peripheral edge portion of the sealing assembly 36 is sealed with the gasket 46.

Note that the lower vent member 42, the upper vent member 44, and the cap 45 constitute the safety valve of the sealing assembly 36. When the inner pressure increases in case of abnormal heat generation in the battery 30, the lower vent member 42 is deformed to push up the upper vent member 44 toward the cap 45 and is fractured, thereby blocking the current path between the lower vent member 42 and the upper vent member 44. When the internal pressure further increases, the upper vent member 44 is fractured, and gas is exhausted through an exhaust port 45A formed in the side surface of the projection of the cap 45.

### "Another Configuration Example"

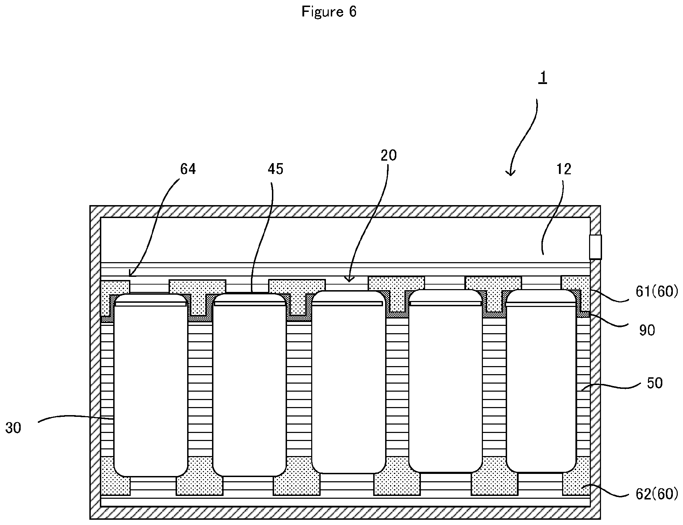

FIG. 6 shows another configuration example of the heat insulator 90. In this case, the heat insulator 90 is disposed also on the upper side surface and the upper peripheral portion so as to cover not only the lower surface of the first holder 61 but also the upper shoulder portion of the battery 30. Such a configuration can also prevent the liquid coolant at a high temperature from reaching the peripheral portion of the sealing assembly.

### REFERENCE SIGNS LIST

1 Battery pack (electric power storage module)
10 Case
12 Exhaust chamber
20 Battery block
30 Battery (electric power storage device)
31 Positive electrode
32 Negative electrode
33 Separator
34 Electrode assembly
35 Housing body
36 Sealing assembly
37 Insulating plate
38 Insulating plate
39 Positive electrode lead
40 Negative electrode lead
41 Internal terminal plate
42 Lower vent member
43 Insulating member
44 Upper vent member
45 Cap
45A Exhaust port
46 Gasket
50 Liquid coolant
60 Holder
61 First holder
62 Second holder
63 Concave
64 Opening portion
90 Heat insulator
91 Opening portion

## Claims

1. An electric power storage module, comprising:
a case;
a plurality of electric power storage devices accommodated in the case;
liquid coolant that fills the case;
a holder that is disposed in the case, and accommodates upper portions of the electric power storage devices; and
a heat insulator that is positioned around the plurality of electric power storage devices, and is disposed on a lower surface of the holder, wherein
the plurality of electric power storage devices are immersed in the liquid coolant inside the case.

2. The electric power storage module according to claim 1, wherein the heat insulator is in contact with side surfaces of the plurality of electric power storage devices so as to prevent the liquid coolant positioned below the heat insulator from reaching top portions of the plurality of electric power storage devices.
